# FASCICULE DE BREVET EUROPEEN

(11) **EP 3 050 275 B1**
(45) Date de publication et mention de la délivrance du brevet: **25.07.2018**
(21) Numéro de dépôt: 14784314.8
(22) Date de dépôt: 19.09.2014
(51) Int. Cl.: H04L 29/06, H04L 29/08, H04L 12/14

(54) **CONVERSION DE PROTOCOLE ENRICHIE DANS UN RÉSEAU DE TÉLÉCOMMUNICATIONS POUR LA FOURNITURE DE SERVICES À QUALITÉ DE SERVICE AMÉLIORÉE**
VERBESSERTE PROTOKOLLUMWANDLUNG IN EINEM TELEKOMMUNIKATIONSNETZ ZUR BEREITSTELLUNG VON DIENSTEN MIT VERBESSERTER DIENSTGÜTE
ENHANCED PROTOCOL CONVERSION IN A TELECOMMUNICATIONS NETWORK FOR PROVIDING SERVICES HAVING IMPROVED QUALITY OF SERVICE

(30) Priorité: 25.09.2013 FR 1359253
(43) Date de publication de la demande: 03.08.2016
(73) Titulaire: Orange, 75015 Paris (FR)
(72) Inventeur: BIHANNIC, Nicolas, F-22560 Trebeurden (FR); BAJDOURI, Najib, 91300 Massy (FR); BESSE, Julien, F-92240 Malakoff (FR)
(74) Mandataire: Cabinet Plasseraud
(86) Numéro de dépôt international: PCT/FR2014/052336
(87) Numéro de publication internationale: WO 2015/044566

(56) Documents cités:
- US-A1- 2007 005 801
- ORANGE: "Discussion on the scope of the TR, regarding (not Diameter-based) interaction between AF and PCRF", 3GPP DRAFT; C3-131128, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG3, no. Vienna, Austria; 20130805 - 20130809 29 juillet 2013 (2013-07-29), XP050714386, Extrait de l'Internet: URL:http://www.3gpp.org/ftp/tsg_ct/WG3_int erworking_ex-CN3/TSGC3_74_Vienna/Docs/ [extrait le 2013-07-29]
- "3rd Generation Partnership Project; Technical Specification Group Core Network and Terminals; Study on XML based access of AF to the PCRF (Release 12)", 3GPP STANDARD; 3GPP TR 29.817, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V0.2.0, 18 septembre 2013 (2013-09-18), pages 1-47, XP050712255, cité dans la demande

## Description

La présente invention concerne le traitement de données dans un réseau de télécommunications, en particulier dans un réseau mobile.

Elle concerne plus particulièrement la coopération entre fournisseurs de service tiers et un opérateur du réseau de télécommunications.

Le nombre et le volume de contenus numériques accessibles sur les réseaux de télécommunications mobiles de type IP (pour « *Internet Protocol* » en anglais) tendent à augmenter exponentiellement.

Les opérateurs mobiles cherchent à proposer aux fournisseurs de services tiers des solutions techniques attractives pour demander l'accès à des ressources d'un réseau de télécommunications. Les fournisseurs de service peuvent ainsi requérir une qualité de service donnée pour le transport des données du fournisseur de service dans le réseau de télécommunications.

Les enjeux principaux pour l'opérateur réseau sont de permettre au fournisseur de service de préciser le besoin en ressources réseau, pour un service donné, et de mettre en oeuvre des mécanismes réseau qui permettent de contrôler au mieux les ressources qui sont nécessaires pour ce service.

De nouvelles fonctionnalités, telles que PCC (pour « *Policy and Charging Control* » en anglais), sont décrites dans les standards du 3GPP. Ces fonctionnalités sont déployées ou en cours de déploiement par les opérateurs de réseau de télécommunications. Parmi les différentes fonctionnalités du PCC, il est possible pour un fournisseur de service de demander une certaine qualité de service pour le service en cours sur le réseau de télécommunications. Une telle demande requiert l'envoi d'une requête sur une interface Rx (définie dans le standard « Technical Specification Group Core Network and Terminais ; Policy and Charging Control over Rx reference point », TS 29-214, version 11.8.0 du 15 mars 2013) qui utilise un protocole réseau appelé Diameter.

Un tel choix protocolaire répond efficacement aux besoins de l'opérateur réseau pour la mise en place de ressources réseau pour le service demandé. Cependant, un tel protocole est peu adapté à une utilisation par les fournisseurs de service tiers.

Afin d'améliorer l'interface entre le fournisseur de service et l'opérateur réseau, le standard du 3GPP « Study on XML based access of AF to the PCRF », TR29-817, version 0.1.0 de juin 2013, propose d'évaluer l'intérêt d'un support de protocole web basé sur le langage XML en complément du protocole Diameter actuel.

A cet effet, un convertisseur de protocole PC (pour « Protocol Converter » en anglais) du réseau est apte à communiquer avec les fournisseurs de service via une interface XML, et avec un serveur PCC via l'interface Rx.

Une telle solution requiert que le fournisseur de service renseigne dans un fichier XML l'ensemble des attributs nécessaires à l'allocation de ressources par l'opérateur mobile. Le convertisseur de protocole reçoit alors le fichier XML comprenant un ensemble de valeurs de paramètres techniques et initie un message qui intègre les valeurs de ces paramètres en utilisant le protocole Diameter, en vue de la transmission du message vers le serveur PCC.

Afin d'initier le message selon le protocole Diameter, le convertisseur de protocole fait une correspondance un pour un entre les valeurs de paramètres reçus via l'interface XML et les valeurs indiquées dans le message de l'interface Rx.

Ainsi, une telle solution requiert du fournisseur de service tiers qu'il indique dans le fichier XML l'ensemble des paramètres nécessaires à l'interface Rx, ce qui requiert une expertise technique du fournisseur de service concernant la compréhension des paramètres techniques (tels que le débit maximum garanti, etc) et concernant le paramétrage des valeurs associées à ces paramètres.

Cependant, le fournisseur de service ne dispose pas nécessairement d'une telle expertise technique, ce qui complexifie l'accès aux fonctionnalités du serveur PCC.

Le document US 2007/005801 décrit un élément d'infrastructure réseau tel qu'un routeur réalisant le courtage d'identités réseau d'utilisateurs et d'informations d'accréditation.

Le document « 3rd Generation Partnership Project ; Technical Specification Group Core Network and Terminais ; Study on XML based access of AF to the PCRF (Release 12) », 3GPP STANDARD; 3GPP TR 29.817, MOBILE COMPETENCE CENTRE; 650, ROUTE DES LUCIOLES; F-06921 SOPHIA-ANTIPOLIS CEDEX; FRANCE, vol. CT WG3, no. V0.2.0, 18 septembre 2013, pages 1-47, prévoit de gérer les interactions entre le PCC et les différents types de fonctions d'application AF.

Le document "Discussion on the scope of the TR, regarding (not Diameter-based) interaction between AF and PCRF", C3-131128, Orange, 29-07-2013, décrit l'interaction entre une application tiers et le serveur PCRF en utilisant un API. La présente invention, définie par les revendications, vient améliorer la situation.

Elle propose à cet effet un procédé de traitement de données dans un réseau de télécommunications, le procédé étant mis en oeuvre dans un premier serveur du réseau de télécommunications et comprenant les étapes suivantes :
- recevoir une première requête d'initiation de session depuis un second serveur d'un fournisseur de service, la première requête comprenant un identifiant de fournisseur de service ;
- à partir de l'identifiant de fournisseur de service, obtenir un ensemble de paramètres techniques du réseau adaptés à une qualité de service souscrite par le fournisseur de service identifié dans la première requête ;
- générer une seconde requête d'initiation de session, la seconde requête comprenant
- l'ensemble de paramètres techniques adaptés ;
- transmettre la seconde requête d'initiation de session à un serveur de contrôle de ressources du réseau de télécommunications.

Ainsi, la présente invention propose de simplifier l'interface entre un premier serveur, pouvant être le convertisseur de protocole décrit précédemment, et un second serveur d'un fournisseur de service.

En effet, le fournisseur de service ne dispose pas nécessairement d'une expertise technique suffisante pour renseigner une requête comprenant un ensemble de paramètres techniques complexes et propres au réseau de télécommunications. L'invention prévoit alors la transmission d'une première requête comprenant des données minimales et compréhensibles pour le fournisseur de service, et l'enrichissement de cette première requête dans le premier serveur qui appartient au réseau de télécommunications et qui a accès à des paramètres techniques spécifiques au réseau. La compréhension des données incluses dans la première requête est alors améliorée, tout en conservant inchangée l'interface entre le premier serveur et le serveur de contrôle de ressources du réseau de télécommunications (pouvant être l'interface Rx précédemment introduite).

Selon un mode de réalisation de l'invention, obtenir l'ensemble de paramètres techniques comprend la consultation d'une base de données mettant en correspondance chaque identifiant de fournisseur parmi une pluralité d'identifiants de fournisseur avec au moins un ensemble de paramètres techniques du réseau.

Une telle réalisation permet ainsi un accès simplifié à l'ensemble de paramètres techniques à partir d'un unique identifiant. Les correspondances peuvent par ailleurs être stockées localement au niveau du premier serveur ce qui réduit les données à échanger avec d'autres entités du réseau comme le système d'information, et réduit l'encombrement du réseau.

Selon un mode de réalisation, la première requête peut comprendre en outre une information de niveau de qualité de service requis, un ensemble de paramètres techniques spécifiques peut être associé à chaque niveau de qualité de service requis, pour un fournisseur de service donné, et le procédé peut comprendre en outre, sur réception de la première requête comportant un identifiant de fournisseur de service et une information de niveau de qualité de service requis, l'étape consistant à générer une seconde requête d'initiation de session, comprenant l'ensemble de paramètres techniques adaptés au niveau de qualité de service requis et pour le fournisseur de service identifié dans la première requête.

Une telle réalisation permet au fournisseur de service de différencier ses utilisateurs en différentes classes, chaque classe correspondant à un niveau de qualité de service donné. Ainsi, l'interface proposée entre le fournisseur de service et le premier serveur est générique, et peut être utilisée à la fois pour des services proposant différent niveaux de qualité, ou pour des services proposant un unique niveau de qualité pour l'ensemble des utilisateurs.

En complément ou en variante, la première requête peut comprendre en outre un identifiant de service requis, un ensemble de paramètres techniques spécifiques peut être associé à chaque service requis, pour un fournisseur de service donné, et le procédé peut comprendre en outre, sur réception de la première requête comportant un identifiant de fournisseur de service et un identifiant de service requis, l'étape consistant à générer une seconde requête d'initiation de session comprenant l'ensemble de paramètres techniques adaptés au service requis et pour le fournisseur de service identifié dans la première requête.

Une telle réalisation permet à des fournisseurs proposant différents types de service, de différencier les services par niveau de qualité requis dans le réseau, rendant ainsi générique l'interface proposée entre le fournisseur de service et le premier serveur.

Le procédé peut en outre comprendre, sur réception de la première requête d'initiation de session, les étapes suivantes:
- créer un identifiant de session comprenant une donnée d'estampille temporelle et un identifiant unique ;
- envoyer l'identifiant de session au second serveur de fournisseur de service, en vue de permettre au second serveur de générer une requête de modification de qualité de service pour la session identifiée.

Ce mode de réalisation permet au fournisseur de service de pouvoir identifier une session d'un utilisateur auprès du premier serveur du réseau, et d'ainsi pouvoir adresser une requête de modification de qualité de service pour une session en cours (sur demande de l'utilisateur par exemple). L'identifiant de session peut par exemple comprendre en outre un identifiant Diameter du fournisseur de service, cet identifiant Diameter ayant été généré par le server de contrôle de ressources.

Dans un mode de réalisation, la première requête d'initiation de session peut comprendre un instant d'initiation et la seconde requête d'initiation de session peut être transmise au serveur de contrôle de ressources à l'instant d'initiation compris dans la première requête.

Ainsi, le fournisseur de service peut requérir un établissement différé d'une session pour l'un de ses utilisateurs. L'invention peut en outre prévoir l'introduction d'un instant de modification dans une requête de modification de qualité de service pour une session en cours, ce qui permet de différer la modification de la qualité de service.

Dans un mode de réalisation, le procédé comprend les étapes initiales suivantes :
- réception d'une requête de souscription à une qualité de service souhaitée dans le réseau de télécommunications, depuis le second serveur du fournisseur de service, la requête de souscription comprenant un identifiant de fournisseur de service et la qualité de service étant définie par un ensemble de paramètres techniques du réseau ; et
- stockage dans une base de données, d'une correspondance entre l'identifiant de fournisseur de service et l'ensemble de paramètres techniques du réseau.

Ce mode de réalisation permet d'assurer que l'enrichissement de la première requête d'initiation de session est conforme à une offre de service préalablement souscrite par le fournisseur de service.

Selon une réalisation de l'invention, les paramètres techniques peuvent comprendre l'un des éléments suivants, ou toute combinaison parmi les éléments suivants :
- bande passante minimale en voie montante et/ou descendante ;
- bande passante maximale en voie montante et/ou descendante;
- latence ;
- gigue.

De tels éléments requièrent des connaissances techniques complexes et sont ainsi, selon l'invention, renseignées dans la requête d'initiation par le premier serveur du réseau, et non plus par le fournisseur de service comme c'est le cas dans l'art antérieur présenté en partie introductive. De plus, une mauvaise compréhension des paramètres techniques par le fournisseur de service risque d'engendrer un mauvais paramétrage par le fournisseur de service tiers.

Dans un mode de réalisation de l'invention, la première requête est une requête HTTP POST comprenant un fichier XML, le fichier XML comprenant le premier identifiant de fournisseur de service, et la seconde requête peut être une requête Diameter vers un serveur de contrôle de ressources du réseau de télécommunications.

Ainsi, cette réalisation est compatible avec le protocole Diameter utilisé dans les architectures PCC, tout en utilisant une interface HTTP entre les premier et second serveurs, interface qui est accessible et connue des fournisseurs de service.
Selon un mode de réalisation, le procédé peut en outre comprendre les étapes suivantes :
- générer au moins une troisième requête d'initiation de session, la au moins une troisième requête comprenant l'ensemble de paramètres techniques adaptés ;
- transmettre ladite au moins une troisième requête d'initiation de session à au moins un deuxième serveur du réseau de télécommunications, distinct du serveur de contrôle de ressources.

Ainsi, la conversion de protocole opérée par le premier serveur permet de générer des troisièmes requêtes destinées par exemple à des plateformes d'optimisation web (pour la compression de contenus par exemple) ou à des plateformes de distribution de contenus (dans le cadre de solutions de « caching » ou de « Content Delivery Networks » CDN). Le premier serveur n'est ainsi pas exclusivement dédié à un serveur de contrôle de ressources, ce qui permet ainsi de simplifier l'interface entre le second serveur et des serveurs du réseau ayant d'autres fonctionnalités que le contrôle des ressources du réseau.

Un deuxième aspect de l'invention concerne un programme d'ordinateur comportant des instructions pour la mise en oeuvre du procédé selon l'une quelconque des revendications précédentes, lorsque ce programme est exécuté par un processeur.

Un troisième aspect de l'invention concerne un serveur pour un réseau de télécommunications, le serveur comprenant :
- une unité de réception d'une première requête d'initiation de session depuis un serveur d'un fournisseur de service, la première requête comprenant un identifiant de fournisseur de service ;
- une unité d'obtention d'un ensemble de paramètres techniques du réseau adaptés à une qualité de service souscrite par le fournisseur de service identifié dans la première requête à partir de l'identifiant de fournisseur de service ;
- une unité de génération d'une seconde requête d'initiation de session, la seconde requête comprenant l'ensemble de paramètres techniques adaptés ;
- une unité de transmission de la seconde requête d'initiation de session à un serveur de contrôle de ressources du réseau de télécommunications.

Selon une réalisation de l'invention, le serveur peut comprendre en outre une base de données mettant en correspondance chaque identifiant de fournisseur parmi une pluralité d'identifiants de fournisseur avec au moins un ensemble de paramètres techniques du réseau.

En complément ou en variante, l'unité de génération peut être configurée en outre pour générer au moins une troisième requête d'initiation de session, la troisième requête comprenant l'ensemble de paramètres techniques adaptés, et l'unité de transmission peut être configurée en outre pour transmettre la au moins une troisième requête d'initiation de session à au moins un serveur du réseau de télécommunications distinct du serveur de contrôle de ressources.

Un quatrième aspect de l'invention concerne un système de traitement de données dans un réseau de télécommunications, le système comprenant un premier serveur du réseau de télécommunications, un second serveur d'un fournisseur de service et au moins un serveur de contrôle de ressource, le premier serveur étant un serveur selon le troisième aspect de l'invention.

D'autres caractéristiques et avantages de l'invention apparaîtront à l'examen de la description détaillée ci-après, et des dessins annexés sur lesquels:
- la figure 1 illustre un système de traitement de données selon un mode de réalisation de l'invention ;
- la figure 2 est un diagramme illustrant les étapes d'un procédé de traitement de données selon un mode de réalisation de l'invention ;
- la figure 3 illustre la structure d'un serveur d'un réseau de télécommunications selon un mode de réalisation de l'invention.

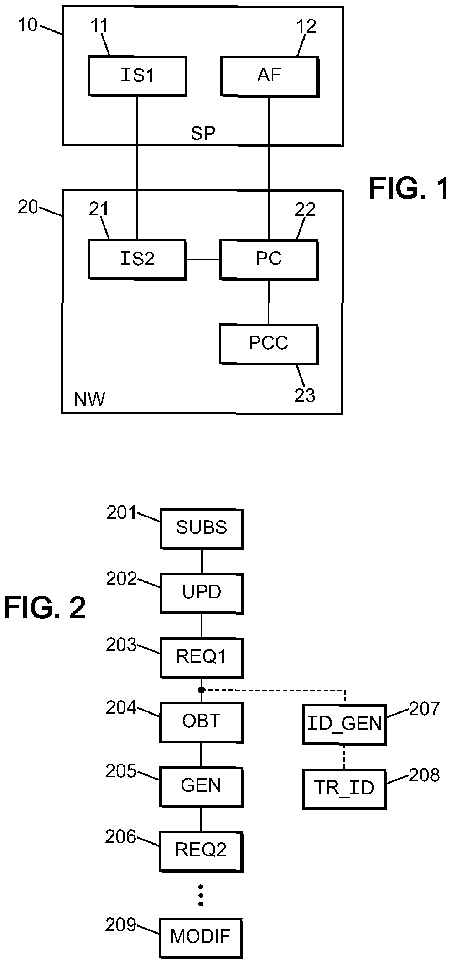

La **figure 1** illustre un système de traitement de données selon un mode de réalisation de l'invention.

Le système de traitement de données comprend un système d'information 11 et un serveur 12 d'un fournisseur de service tiers 10. A travers le système d'information 11, le fournisseur de service 10 peut souscrire à une offre de qualité de service de l'opérateur du réseau 20. Le serveur 12 peut comprendre une fonction d'application et est apte à accéder à un réseau de télécommunications 20 d'un opérateur, via l'émission de requêtes selon le protocole HTTP par exemple. Comme détaillé dans ce qui suit, une requête HTTP POST comprenant un fichier XML peut être envoyée dans le réseau de télécommunications 20 en vue de l'établissement d'une session de communication pour un utilisateur du fournisseur de service.

Le réseau 20 comprend un système d'information 21 et un serveur 22 permettant des conversions de protocole entre le serveur 12 du fournisseur de service 10 et un serveur de contrôle de ressources 23 du réseau, de type serveur PCC par exemple. Aucune restriction n'est attachée au serveur de contrôle de ressources 23, qui peut, à titre alternatif, être une plateforme d'optimisations web (par exemple pour la compression de contenus) ou une plateforme de distribution de contenus (par exemple pour des solutions de « caching » ou de CDN, pour « Content Delivery Network » en anglais). Dans le cas où le serveur de contrôle de ressources 23 n'est pas un serveur de type PCC mais un serveur d'optimisation Web ou un serveur CDN, alors le protocole d'échange entre le serveur 22 du réseau et le serveur 23 pourra être un protocole autre que Diameter.

Dans la suite de la demande, le serveur 22 du réseau 20 est appelé premier serveur 22 et le serveur 12 du fournisseur de service est appelé second serveur 12.

Le système d'information 21 peut être en charge de gérer une relation client avec le fournisseur de service 10. A cet effet, il peut :
- informer le fournisseur de service 10 de fonctions supportées par une offre de qualité de service donnée ;
- traiter toute demande de souscription, modification ou résiliation d'une offre de qualité de service au fournisseur de service 10 ;
- notifier le fournisseur de service 10 des actions réalisées au niveau du réseau 20 suite à des demandes faites via l'interface entre le premier serveur 22 et le second serveur 12 ;
- envoyer des données de facturation ainsi que des rapports d'usage de l'interface précitée par le fournisseur de service 10.

Comme détaillé en partie introductive l'interface entre le premier serveur 22 et le second serveur 12 peut être une interface HTTP logicielle (aussi appelée Qos API pour « *Quality of Service Application Programming Interface* » par la suite) tandis que l'interface entre le premier serveur 22 et le serveur PCC 23 peut correspondre à l'interface Rx, utilisant le protocole Diameter, tel que décrit dans la norme TS 29-214 précitée.

Le système illustré en Figure 1 comprend un unique fournisseur de service 10. Toutefois, un tel exemple est illustratif et l'invention prévoit qu'une pluralité d'interface Qos API permette au premier serveur 22 de servir une pluralité de fournisseurs de service.

La **Figure 2** est un diagramme illustrant les étapes d'un procédé selon un mode de réalisation de l'invention.

A une étape 201, le fournisseur de service 10 souscrit à une offre de qualité de service de l'opérateur du réseau 20. Une telle étape peut également correspondre à une résiliation d'une offre de qualité de service précédemment contractée. De manière plus générale, l'étape 201 correspond à l'ajout ou au retrait d'une ou de plusieurs options pour une offre de qualité de service donnée, par l'envoi d'une requête de souscription du système d'information 11 du fournisseur de service 10 vers le système d'information 21 du réseau 20. La requête de souscription comprend un identifiant du fournisseur de service 10. Une offre de qualité de service requis par le fournisseur de service 10 est associée, pour le réseau 20, à un ensemble de paramètres techniques adaptés à la qualité de service souscrite par le service du fournisseur de service 10 dans le réseau 20. Aucune restriction n'est cependant attachée à la manière dont la souscription à une offre est effectuée.

A une étape 202, le système d'information 21 du réseau met à jour une base de données du premier serveur 22, en communiquant l'ensemble des paramètres techniques mis à jour lors de l'étape précédente ainsi que l'identifiant du fournisseur de service 10 pour lequel l'ensemble des paramètres techniques a été mis à jour. L'ensemble des paramètres techniques peut comprendre toute combinaison parmi les éléments suivants : bande passante minimale en voie montante et/ou descendante, bande passante maximale en voie montante et/ou descendante, latence, gigue, fiabilité telle que le taux de perte de paquets autorisé. De manière avantageuse, cet ensemble de paramètres techniques est associé à une offre de qualité de service ne requérant pas d'expertise technique particulière pour le fournisseur de service 10. De tels paramètres techniques sont donc uniquement échangés en interne dans le réseau 20. Ainsi, le premier serveur 22 peut stocker une correspondance entre l'identifiant du fournisseur de service et l'ensemble de paramètres techniques. A cet effet, la base de données dispose d'ensembles de paramètres techniques relatifs aux offres de qualité de service souscrites par chacun des fournisseurs de service tiers.

A une étape 203, une première requête d'initiation de session est envoyée du second serveur 12 au premier serveur 22, via l'interface Qos API, selon le protocole HTTP, la requête d'initiation comprenant au moins l'identifiant du fournisseur de service 10. Un tel identifiant peut par exemple être inclus dans un fichier XML. D'autres informations détaillées dans ce qui suit peuvent être incluses dans le fichier XML (identifiant de service requis et/ou information de niveau de qualité de service requis notamment).

A partir d'au moins l'identifiant du fournisseur de service 10, le premier serveur 22 peut consulter sa base de données stockant les correspondances précitées, afin d'obtenir, à une étape 204, l'ensemble de paramètres techniques associés à l'utilisateur identifié dans la première requête.

A une étape 205, une seconde requête d'initiation de session est générée à partir de l'ensemble de paramètres techniques obtenu. Les paramètres techniques peuvent être convertis en éléments Diameter dans la seconde requête qui peut ainsi être transmise à une étape 206 via l'interface Rx au serveur PCC 23.

Le premier serveur 22 traduit ainsi les requêtes d'initiation de session reçues sur l'interface QoS API en paramètres techniques applicables par PCC, contrairement à l'approche de l'art antérieur selon laquelle le première requête d'initiation doit comprendre l'ensemble des paramètres attendus par le serveur PCC 23.

Ainsi, comparativement à l'art antérieur décrit en partie introductive, la présente invention permet d'éviter que le fournisseur de service 10 ait à renseigner un ensemble de paramètres techniques qui sont uniquement nécessaires à l'opérateur de réseau pour la mise en oeuvre d'une qualité de service souscrite par le fournisseur de service 10, dans le réseau 20. L'opérateur du réseau 20 prend ainsi à sa charge la traduction d'une offre de qualité de service contractée par le fournisseur de service 10 en paramètres techniques qui sont appliqués au niveau du réseau 20, ce qui garantit le bon paramétrage des paramètres techniques.

Comme précédemment décrit, la première requête d'initiation de session comprend un fichier XML comprenant au moins l'identifiant du fournisseur de service 10. L'identifiant du fournisseur de service peut être un paramètre « TSP-Id » (pour « Third party Service Provider Identifier » en anglais). Un tel paramètre est présent dans une URL de destination de la première requête d'initiation sous la forme suivante, par exemple :
http://QoSAPI.com/?TSP-Id.

Les informations suivantes, conformes au langage XML, peuvent en outre être incluses dans le fichier XML précité :
- RequestType : cette information permet au second serveur 12 de spécifier au premier serveur 22 si la requête est une requête d'initiation (cas détaillé ci-avant) ou une requête de modification d'une requête précédemment envoyée (détaillé ultérieurement). Pour une requête d'initiation, ou création, « RequestType » prend la valeur « création » tandis que pour une modification, « RequestType » prend la valeur « modification » en y associant un identifiant de session « SessionID » décrit dans ce qui suit ;
- SessionID : cette information identifie la session au niveau des interfaces QoS API et Rx. Elle peut être créée à une étape optionnelle 207 par le premier serveur 22 sur réception de la première requête d'initiation (étape 203). L'identifiant de session peut être construit à partir des informations suivantes :
   - un identifiant Diameter du fournisseur de service 10 ;
   - TimeStamp : une donnée d'estampille temporelle référençant le lancement de la session (par exemple une valeur codée sur 32 bits) ;
   - un élément, pouvant être codé sur 32 bits, permettant de différencier deux sessions initiées en même temps.
   L'identifiant de session peut être ajouté dans un message HTTP pour être communiqué au second serveur 12 à une étape 208. Un exemple de format pour l'identifiant de session peut être : 3rdSP.orangeApi.com;20130521090;3541687154. Le message HTTP peut contenir uniquement la partie suivante 20130521090;3541687154 qui est nécessaire au premier serveur 22 pour retrouver la session ;
- UeID : cette information précise l'identité du terminal utilisateur (User Equipment). Cette information peut correspondre à une adresse IP attribuée à l'utilisateur par l'opérateur du réseau 20 et peut permettre d'identifier une session de l'utilisateur dans le cadre de l'émission d'une requête de modification de qualité de service. Sur la base de cet identifiant utilisateur et sur réception d'une requête de modification de qualité de service, à une étape 209, le second serveur 12 peut déterminer l'identifiant de session de l'utilisateur concerné, et ainsi insérer un tel identifiant de session dans une requête de modification de qualité de service à transmettre au serveur PCC 23 ;
- QoSLevel : cette information de niveau de qualité de service requis peut être utilisée pour simplifier la demande d'un niveau de qualité de service spécifique lors de l'initiation d'une session par le fournisseur de service 10 pour ses utilisateurs. Dans un contexte où le fournisseur de service 10 ne propose pas de service différencié en fonction de classes d'utilisateurs (contexte appelé B2B pour « Business to Business »), une telle information est optionnelle. Par exemple, pour un événement musical donné où le fournisseur de service de musique en streaming est partenaire de l'artiste, le fournisseur de service peut faire une demande spéciale de qualité de service pour l'écoute des musiques de cet artiste sans discrimination entre utilisateurs du service.
   Dans un contexte où les utilisateurs sont différenciés par classes par le fournisseur de service 10 (contexte appelé B2B2C pour « Business to Business to Consumer »), l'information de niveau de qualité de service requis peut être utilisée pour discriminer les utilisateurs. A titre d'exemple, un fournisseur de service de musique en streaming peut proposer une offre premium avec une qualité d'écoute haute définition HD et une offre non premium avec une qualité d'écoute standard SD. A cet effet, l'information de niveau de qualité de service requis peut prendre la valeur « TSP_premium » pour une qualité HD souhaitée pour une première classe d'utilisateurs, ou une valeur « TSP_nonpremium » pour une qualité SD souhaitée pour une deuxième classe d'utilisateurs ;
- ServiceClass : cette information, qui est un identifiant de service requis, est optionnelle et peut permettre à un fournisseur de service de proposer différents types de services (« Voice over IP » VoIP, jeux, services de streaming, messagerie instantanée, etc) nécessitant des ensembles de paramètres techniques différents. Le fournisseur de service 10 peut ainsi préciser le type de service supporté pour une session (identifiée par l'identifiant de session) considérée. Le premier serveur 22 peut ainsi appliquer des paramètres techniques différents pour chacun des services en cours demandés par des utilisateurs. Dans le cas où une telle information n'est pas renseignée dans le fichier XML, tous les médias (texte, image, vidéo, audio) pour la session en cours bénéficient d'une seule et unique qualité de service dans le réseau 20 ;
- SponsoredConnectivityData : cette information permet au fournisseur de service 10 de prendre à sa charge un surcoût éventuel pour permettre à ses utilisateurs d'accéder à ses services, indépendamment d'un forfait contracté par les utilisateurs avec l'opérateur du réseau 20 ;
- Start/End : cette information, comprenant un instant d'initiation, permet de mettre en attente une demande du fournisseur de service 10 dont l'initiation d'une session n'est pas immédiate. Une telle information permet d'initier une session de manière différée, et la seconde requête d'initiation est transmise au serveur PCC 23 au moment de l'instant d'initiation précisé dans la première requête d'initiation. Une telle information peut également être utilisée dans le cas d'une requête de modification de qualité de service, afin de différer l'instant auquel la modification doit être prise en compte.

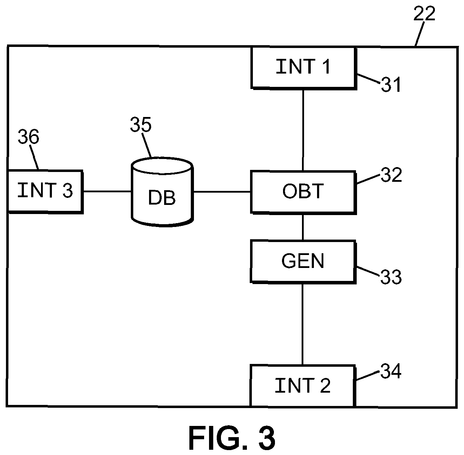

La **Figure 3** illustre un serveur d'un réseau de télécommunications, tel que le premier serveur 22 illustré en Figure 2.

Le premier serveur 22 comprend une première interface 31 correspondant à l'interface QoS API présentée précédemment, par laquelle le premier serveur peut communiquer avec le second serveur 12 du fournisseur de service 10. La première interface 31 est apte à recevoir la première requête d'initiation de session comprenant au moins l'identifiant du fournisseur de service (dans un fichier XML par exemple, comme précédemment détaillé). Le premier serveur 22 comprend en outre une unité d'obtention d'un ensemble de paramètres techniques du réseau adaptés à une qualité de service souscrite par le fournisseur de service identifié dans la première requête. Des ensembles de paramètres techniques peuvent à cet effet être stockés dans une base de données 35 en correspondance avec des identifiants de fournisseur de service.

A partir de l'ensemble de paramètres techniques obtenus, une seconde requête d'initiation peut être générée par une unité de génération 33. Comme précédemment détaillé, la seconde requête peut être conforme au protocole Diameter pour une transmission sur l'interface Rx avec le serveur PCC 23. A cet effet, le premier serveur 22 comprend en outre une deuxième interface 34 apte à transmettre la seconde requête d'initiation au serveur PCC 23. Plusieurs interfaces 34 peuvent être instanciées, car le serveur ne se limite pas nécessairement à un interaction avec un seul serveur PCC. Par exemple, on peut concevoir une instanciation avec deux serveurs 23, qui peuvent être un serveur PCC et un serveur CDN pour un service de streaming, ou encore un serveur PCC et un serveur d'optimisation Web pour un service de Web browsing.

Une troisième interface 36 permet au système d'information 21 du réseau 20 d'accéder à la base de données 35 afin d'assurer que les données stockées dans la base de données 35 sont à jour et en conformité avec une souscription, une modification ou une résiliation demandée par le fournisseur de service 10 auprès du système d'information 21.

Ainsi, l'interface Qos API présentée ci-dessus est attractive pour le fournisseur de service 10 comparativement à l'art antérieur présenté en partie introductive. En effet, la complexité d'utilisation d'une telle interface par le fournisseur de service 10 est réduite à son maximum dans la mesure où les paramètres (possiblement un unique identifiant de fournisseur de service) à renseigner dans la première requête sont simplifiés et la compréhension de ce ou de ces paramètres est rendue plus facile car moins spécifique du réseau 20. De plus, le fournisseur de service 10 a la garantie que sa demande (initiation de session ou modification de qualité de service) est complétée par le premier serveur 22 en cohérence avec une offre précédemment souscrite auprès de l'opérateur du réseau 20.

En rendant l'interface entre le fournisseur de service 10 et le réseau 20 plus attractive pour le fournisseur de service 10, l'opérateur du réseau 20 peut ainsi développer de nouvelles offres de service en complément d'offres existantes qui sont généralement orientées vers l'utilisateur final. La coopération entre fournisseur de service et opérateur est ainsi renforcée et enrichie. De plus, les fournisseurs de service peuvent enrichir la segmentation de leur offre de service en différenciant la qualité de service rendue entre classes d'utilisateurs.

L'interface proposée est en outre compatible avec un contexte B2B dans lequel le fournisseur de service demande la mise en oeuvre d'une qualité de service indépendamment de l'offre de service de l'utilisateur vis-à-vis du fournisseur de service, et avec un contexte B2B2C dans lequel le fournisseur de service demande une qualité de service liée à un profil de l'utilisateur vis-à-vis du fournisseur de service.

Bien entendu, la présente invention ne se limite pas aux formes de réalisation décrites ci-avant à titre d'exemple, mais peut s'étendre à d'autres variantes.

Ainsi, il a été décrit un mode de réalisation dans lequel les paramètres techniques du réseau, obtenus par le premier serveur 22 à partir d'un identifiant du fournisseur de service, sont envoyés par ce serveur 22 prioritairement vers le serveur de contrôle de ressources 23 (e.g. un serveur PCC) du réseau de télécommunications, et éventuellement vers un ou plusieurs autres serveurs du réseau de télécommunications (e.g. une plateforme d'optimisation web ou une plateforme de distribution de contenus, type CDN) selon les cas de figures. Un autre mode de réalisation est cependant également envisageable, dans lequel le premier serveur 22 envoie ces paramètres techniques vers l'un de ces autres serveurs de réseau de télécommunications, sans les envoyer au serveur de contrôle de ressources 23 du réseau, selon le contexte d'application envisagé.

## Revendications

1. Procédé de traitement de données dans un réseau de télécommunications (20), le procédé étant mis en oeuvre dans un premier serveur (22) du réseau de télécommunications et comprenant les étapes suivantes :
- recevoir une première requête d'initiation de session depuis un second serveur (12) d'un fournisseur de service (10), ladite première requête comprenant un identifiant de fournisseur de service ;
- à partir de l'identifiant de fournisseur de service, obtenir un ensemble de paramètres techniques du réseau adaptés à une qualité de service souscrite par ledit fournisseur de service identifié dans la première requête, par consultation d'une base de données (35) mettant en correspondance chaque identifiant de fournisseur parmi une pluralité d'identifiants de fournisseur avec au moins un ensemble de paramètres techniques du réseau ;
- générer une seconde requête d'initiation de session à partir de l'ensemble de paramètres techniques obtenu, ladite seconde requête comprenant l'ensemble de paramètres techniques adaptés ;
- transmettre ladite seconde requête d'initiation de session à un serveur de contrôle de ressources (23) du réseau de télécommunications.

2. Procédé selon la revendication 1, dans lequel :
- la première requête comprend en outre une information de niveau de qualité de service requis,
- un ensemble de paramètres techniques spécifiques est associé à chaque niveau de qualité de service requis, pour un fournisseur de service donné, et
- sur réception de la première requête comportant un identifiant de fournisseur de service et une information de niveau de qualité de service requis, générer une seconde requête d'initiation de session, comprenant l'ensemble de paramètres techniques adaptés au niveau de qualité de service requis et pour le fournisseur de service (10) identifié dans la première requête.

3. Procédé selon l'une des revendications 1 et 2, dans lequel :
- la première requête comprend en outre un identifiant de service requis,
- un ensemble de paramètres techniques spécifiques est associé à chaque service requis, pour un fournisseur de service donné,
- sur réception de la première requête comportant un identifiant de fournisseur de service et un identifiant de service requis, générer une seconde requête d'initiation de session comprenant l'ensemble de paramètres techniques adaptés au service requis et pour le fournisseur de service (10) identifié dans la première requête.

4. Procédé selon l'une des revendications précédentes, comprenant en outre, sur réception de la première requête d'initiation de session, les étapes suivantes:
- créer un identifiant de session comprenant une donnée d'estampille temporelle et un identifiant unique ;
- envoyer l'identifiant de session au second serveur (12) de fournisseur de service (10), en vue de permettre audit second serveur de générer une requête de modification de qualité de service pour la session identifiée.

5. Procédé selon l'une des revendications précédentes, dans lequel :
- la première requête d'initiation de session comprend en outre un instant d'initiation ; et
- la seconde requête d'initiation de session est transmise au serveur de contrôle de ressources (23) à l'instant d'initiation compris dans la première requête.

6. Procédé selon l'une des revendications précédentes, comprenant les étapes initiales suivantes :
- réception d'une requête de souscription à une qualité de service souhaitée dans le réseau de télécommunications, depuis le second serveur (12) du fournisseur de service (10), ladite requête de souscription comprenant un identifiant de fournisseur de service et ladite qualité de service étant définie par un ensemble de paramètres techniques du réseau ; et
- stockage dans une base de données (35), d'une correspondance entre l'identifiant de fournisseur de service et l'ensemble de paramètres techniques du réseau.

7. Procédé selon l'une des revendications précédentes, dans lequel les paramètres techniques comprennent l'un des éléments suivants, ou toute combinaison parmi les éléments suivants :
- bande passante minimale en voie montante et/ou descendante ;
- bande passante maximale en voie montante et/ou descendante;
- latence ;
- gigue.

8. Procédé selon l'une des revendications précédentes, dans lequel la première requête est une requête HTTP POST comprenant un fichier XML, ledit fichier XML comprenant le premier identifiant de fournisseur de service, et dans lequel la seconde requête est une requête Diameter.

9. Procédé selon l'une des revendications précédentes, comprenant en outre les étapes suivantes :
- générer au moins une troisième requête d'initiation de session, ladite au moins une troisième requête comprenant l'ensemble de paramètres techniques adaptés ;
- transmettre ladite au moins une troisième requête d'initiation de session à au moins un deuxième serveur du réseau de télécommunications, distinct du serveur de contrôle de ressources (23).

10. Programme d'ordinateur comportant des instructions pour la mise en oeuvre du procédé selon l'une quelconque des revendications précédentes, lorsque ce programme est exécuté par un processeur.

11. Serveur pour un réseau de télécommunications (20), ledit serveur (22) comprenant :
- une unité de réception (31) d'une première requête d'initiation de session depuis un serveur d'un fournisseur de service, ladite première requête comprenant un identifiant de fournisseur de service ;
- une unité d'obtention (32) d'un ensemble de paramètres techniques du réseau adaptés à une qualité de service souscrite par ledit fournisseur de service identifié dans la première requête à partir de l'identifiant de fournisseur de service, par consultation d'une base de données (35) du serveur mettant en correspondance chaque identifiant de fournisseur parmi une pluralité d'identifiants de fournisseur avec au moins un ensemble de paramètres techniques du réseau ;
- une unité de génération (33) d'une seconde requête d'initiation de session à partir de l'ensemble de paramètres techniques obtenu, ladite seconde requête comprenant l'ensemble de paramètres techniques adaptés ;
- une unité de transmission (34) de ladite seconde requête d'initiation de session à un serveur de contrôle de ressources (23) du réseau de télécommunications.

12. Serveur selon la revendication 11, dans lequel l'unité de génération (33) est configurée en outre pour générer au moins une troisième requête d'initiation de session, ladite troisième requête comprenant l'ensemble de paramètres techniques adaptés, et dans lequel l'unité de transmission (34) est configurée en outre pour transmettre ladite au moins une troisième requête d'initiation de session à au moins un serveur du réseau de télécommunications distinct du serveur de contrôle de ressources (23).

13. Système de traitement de données dans un réseau de télécommunications, le système comprenant un premier serveur (22) du réseau de télécommunications (20), un second serveur (12) d'un fournisseur de service (10) et au moins un serveur de contrôle de ressources (23), ledit premier serveur du réseau étant un serveur selon l'une des revendications 11 ou 12.

## Patentansprüche

1. Datenverarbeitungsverfahren in einem Telekommunikationsnetz (20), wobei das Verfahren in einem ersten Server (22) des Telekommunikationsnetzes eingesetzt wird und die folgenden Schritte umfasst:
- Empfang einer ersten Anfrage nach Initiierung einer Sitzung von einem zweiten Server (12) eines Dienstanbieters (10), wobei die erste Anfrage einen Identifikator eines Dienstanbieters umfasst;
- auf Basis des Identifikators eines Dienstanbieters Erhalt einer Gesamtheit von technischen Parametern des Netzes, die an eine Dienstgüte angepasst sind, die von dem in der ersten Anfrage identifizierten Dienstanbieter eingehalten wird, durch Konsultation einer Datenbasis (35), die jeden Identifikator eines Anbieters unter einer Vielzahl von Identifikatoren von Anbietern mit mindestens einer Gesamtheit von technischen Parametern des Netzes in Übereinstimmung bringt,
- Erzeugung einer zweiten Anfrage nach Initiierung einer Sitzung auf Basis der erhaltenen Gesamtheit von technischen Parametern, wobei die zweite Anfrage die Gesamtheit von angepassten technischen Parametern umfasst;
- Übertragung der zweiten Anfrage nach Initiierung einer Sitzung an einen Ressourcenkontrollserver (23) des Telekommunikationsnetzes.

2. Verfahren nach Anspruch 1, bei dem:
- die erste Anfrage ferner eine Information zum erforderlichen Dienstgüteniveau umfasst,
- eine Gesamtheit von spezifischen technischen Parametern jedem erforderlichen Dienstgüteniveau für einen gegebenen Dienstanbieter zugeordnet ist, und
- bei Empfang der ersten Anfrage, umfassend einen Identifikator eines Dienstanbieters und eine Information zum erforderlichen Dienstgüteniveau, Erzeugung einer zweiten Anfrage nach Initiierung einer Sitzung, umfassend die Gesamtheit von technischen Parametern, die an das erforderliche Dienstgüteniveau und für den in der ersten Anfrage identifizierten Dienstanbieter (10) angepasst sind.

3. Verfahren nach einem der Ansprüche 1 und 2, bei dem:
- die erste Anfrage ferner einen Identifikator eines erforderlichen Dienstes umfasst,
- eine Gesamtheit von spezifischen technischen Parametern jedem erforderlichen Dienst für einen gegebenen Dienstanbieter zugeordnet ist,
- bei Empfang der ersten Anfrage, umfassend einen Identifikator eines Dienstanbieters und einen Identifikator eines erforderlichen Dienstes, Erzeugung einer zweiten Anfrage nach Initiierung einer Sitzung, umfassend die Gesamtheit von technischen Parametern, die an den erforderlichen Dienst und für den in der ersten Anfrage identifizierten Dienstanbieter (10) angepasst sind.

4. Verfahren nach einem der vorhergehenden Ansprüche, ferner umfassend bei Empfang der ersten Anfrage nach Initiierung einer Sitzung die folgenden Schritte:
- Erzeugung eines Sitzungsidentifikators, umfassend Zeitstempeldaten und einen einzigen Identifikator;
- Senden des Sitzungsidentifikators an den zweiten Server (12) eines Dienstanbieters (10), um es dem zweiten Server zu ermöglichen, eine Anfrage nach Änderung einer Dienstgüte für die identifizierte Sitzung zu erzeugen.

5. Verfahren nach einem der vorhergehenden Ansprüche, bei dem:
- die erste Anfrage nach Initiierung einer Sitzung ferner einen Initiierungszeitpunkt umfasst; und
- die zweite Anfrage nach Initiierung einer Sitzung an den Ressourcenkontrollserver (23) zu dem Initiierungszeitpunkt, der in der ersten Anfrage enthalten ist, übertragen wird.

6. Verfahren nach einem der vorhergehenden Ansprüche, umfassend die folgenden Anfangsschritte:
- Empfang einer Anfrage nach Einhaltung einer gewünschten Dienstgüte in dem Telekommunikationsnetz vom zweiten Server (12) des Dienstanbieters (10), wobei die Anfrage nach Einhaltung einen Identifikator eines Dienstanbieters umfasst, und die Dienstgüte durch eine Gesamtheit von technischen Parametern des Netzes definiert ist; und
- Speicherung einer Entsprechung zwischen dem Identifikator eines Dienstanbieters und der Gesamtheit von technischen Parametern des Netzes in einer Datenbasis (35).

7. Verfahren nach einem der vorhergehenden Ansprüche, bei dem die technischen Parameter eines der folgenden Elemente in jeder Kombination unter den folgenden Elementen umfassen:
- minimale Bandbreite am aufsteigenden und/oder absteigenden Weg;
- maximale Bandbreite am aufsteigenden und/oder absteigenden Weg;
- Latenz;
- Jitter.

8. Verfahren nach einem der vorhergehenden Ansprüche, bei dem die erste Anfrage eine HTTP POST-Anfrage ist, umfassend eine XML-Datei, wobei die XML-Datei den ersten Identifikator eines Dienstanbieters umfasst, und bei dem die zweite Anfrage eine Diameter-Anfrage ist.

9. Verfahren nach einem der vorhergehenden Ansprüche, ferner umfassend die folgenden Schritte:
- Erzeugung mindestens einer dritten Anfrage nach Initiierung einer Sitzung, wobei die mindestens eine dritte Anfrage die Gesamtheit der angepassten technischen Parameter umfasst;
- Übertragung der mindestens einen dritten Anfrage nach Initiierung einer Sitzung an mindestens einen zweiten Server des Telekommunikationsnetzes, der vom Ressourcenkontrollserver (23) getrennt ist.

10. Computerprogramm, umfassend Befehle für den Einsatz des Verfahrens nach einem der vorhergehenden Ansprüche, wenn dieses Programm von einem Prozessor ausgeführt wird.

11. Server für ein Telekommunikationsnetz (20), wobei der Server (22) umfasst:
- eine Empfangseinheit (31) einer ersten Anfrage nach Initiierung einer Sitzung von einem Server eines Dienstanbieters, wobei die erste Anfrage einen Identifikator eines Dienstanbieters umfasst;
- eine Einheit (32) zum Erhalt einer Gesamtheit von technischen Parametern des Netzes, die an eine Dienstgüte angepasst sind, die vom Dienstanbieter, der in der ersten Anfrage auf Basis des Identifikators eines Dienstanbieters identifiziert wurde, eingehalten wird, durch Konsultation einer Datenbasis (35) des Servers, die jeden Identifikator eines Anbieters unter einer Vielzahl von Identifikatoren von Anbietern mit mindestens einer Gesamtheit von technischen Parametern des Netzes in Übereinstimmung bringt;
- eine Einheit (33) zur Erzeugung einer zweiten Anfrage nach Initiierung einer Sitzung auf Basis der erhaltenen Gesamtheit von technischen Parametern, wobei die zweite Anfrage die Gesamtheit von angepassten technischen Parametern umfasst;
- eine Einheit (34) zur Übertragung der zweiten Anfrage nach Initiierung einer Sitzung an einen Ressourcenkontrollserver (23) des Telekommunikationsnetzes.

12. Server nach Anspruch 11, bei dem die Erzeugungseinheit (33) ferner konfiguriert ist, um mindestens eine dritte Anfrage nach Initiierung einer Sitzung zu erzeugen, wobei die dritte Anfrage die Gesamtheit von angepassten technischen Parametern umfasst, und wobei die Übertragungseinheit (34) ferner konfiguriert ist, um die mindestens eine dritte Anfrage nach Initiierung einer Sitzung an mindestens einen Server des Telekommunikationsnetzes zu übertragen, der vom Ressourcenkontrollserver (23) getrennt ist.

13. Datenverarbeitungssystem in einem Telekommunikationsnetz, wobei das System einen ersten Server (22) des Telekommunikationsnetzes (20), einen zweiten Server (12) eines Dienstanbieters (10) und mindestens einen Ressourcenkontrollserver (23) umfasst, wobei der erste Server des Netzes ein Server nach einem der Ansprüche 11 oder 12 ist.

## Claims

1. Method for processing data in a telecommunications network (20), the method being implemented in a first server (22) of the telecommunications network and comprising the following steps:
- receiving a first session initiation request from a second server (12) of a service provider (10), said first request containing a service provider identifier;
- from the service provider identifier, obtaining a set of technical parameters of the network that are suitable for a quality of service subscribed by said service provider identified in the first request, by consulting a database (35) matching each provider identifier, from among a plurality of provider identifiers, with at least one set of technical parameters of the network;
- generating a second session initiation request from the set of technical parameters obtained, said second request containing the set of suitable technical parameters;
- transmitting said second session initiation request to a resource control server (23) of the telecommunications network.

2. Method according to Claim 1, wherein:
- the first request furthermore contains an item of requested quality of service level information,
- a set of specific technical parameters is associated with each requested quality of service level, for a given service provider, and
- upon receipt of the first request including a service provider identifier and an item of requested quality of service level information, generating a second session initiation request, containing the set of technical parameters suitable for the requested quality of service level and for the service provider (10) identified in the first request.

3. Method according to either of Claims 1 and 2, wherein:
- the first request furthermore contains a requested service identifier,
- a set of specific technical parameters is associated with each requested service, for a given service provider,
- upon receipt of the first request including a service provider identifier and a requested service identifier, generating a second session initiation request containing the set of technical parameters suitable for the requested service and for the service provider (10) identified in the first request.

4. Method according to one of the preceding claims, furthermore comprising, upon receipt of the first session initiation request, the following steps:
- creating a session identifier containing a time-stamped item of data and a unique identifier;
- sending the session identifier to the second server (12) of the service provider (10), for the purpose of allowing said second server to generate a quality of service modification request for the session identified.

5. Method according to one of the preceding claims, wherein:
- the first session initiation request furthermore contains an initiation time; and
- the second session initiation request is transmitted to the resource control server (23) at the initiation time contained in the first request.

6. Method according to one of the preceding claims, comprising the following initial steps:
- receiving a request to subscribe to a desired quality of service in the telecommunications network, from the second server (12) of the service provider (10), said subscription request containing a service provider identifier and said quality of service being defined by a set of technical parameters of the network; and
- storing, in a database (35), a match between the service provider identifier and the set of technical parameters of the network.

7. Method according to one of the preceding claims, wherein the technical parameters include one of the following elements, or any combination from among the following elements:
- minimum uplink and/or downlink bandwidth;
- maximum uplink and/or downlink bandwidth;
- latency;
- jitter.

8. Method according to one of the preceding claims, wherein the first request is an HTTP POST request containing an XML file, said XML file containing the first service provider identifier, and wherein the second request is a Diameter request.

9. Method according to one of the preceding claims, furthermore comprising the following steps:
- generating at least one third session initiation request, said at least one third request containing the set of suitable technical parameters;
- transmitting said at least one third session initiation request to at least one second server of the telecommunications network, separate from the resource control server (23).

10. Computer program including instructions for implementing the method according to any one of the preceding claims when this program is executed by a processor.

11. Server for a telecommunications network (20), said server (22) comprising:
- a unit (31) for receiving a first session initiation request from a server of a service provider, said first request containing a service provider identifier;
- a unit (32) for obtaining a set of technical parameters of the network that are suitable for a quality of service subscribed by said service provider identified in the first request from the service provider identifier, by consulting a database (35) of the server matching each provider identifier, from among a plurality of provider identifiers, with at least one set of technical parameters of the network;
- a unit (33) for generating a second session initiation request from the set of technical parameters obtained, said second request containing the set of suitable technical parameters;
- a unit (34) for transmitting said second session initiation request to a resource control server (23) of the telecommunications network.

12. Server according to Claim 11, wherein the generation unit (33) is furthermore configured to generate at least one third session initiation request, said third request containing the set of suitable technical parameters, and wherein the transmission unit (34) is furthermore configured to transmit said at least one third session initiation request to at least one server of the telecommunications network, separate from the resource control server (23).

13. System for processing data in a telecommunications network, the system comprising a first server (22) of the telecommunications network (20), a second server (12) of a service provider (10) and at least one resource control server (23), said first server of the network being a server according to either of Claims 11 and 12.
